# EUROPEAN PATENT SPECIFICATION

(11) **EP 2 667 085 B1**
(45) Date of publication and mention of the grant of the patent: **06.07.2016**
(21) Application number: 11856280.0
(22) Date of filing: 26.10.2011
(51) Int. Cl.: F21K 99/00, F21V 29/00

(54) **LIGHT BULB SHADED LAMP AND LIGHTING APPARATUS**
GLÜHBIRNENFÖRMIGE LEUCHTE UND BELEUCHTUNGSVORRICHTUNG
LAMPE DU TYPE AMPOULE ET DISPOSITIF D'ÉCLAIRAGE

(30) Priority: 18.01.2011 JP 2011007445
(43) Date of publication of application: 27.11.2013
(73) Proprietor: Panasonic Intellectual Property Management Co., Ltd., Osaka 540-6207 (JP)
(72) Inventor: MATSUDA, Tsugihiro, Osaka 540-6207 (JP); MIKI,Masahiro, Osaka 540-6207 (JP); UEMOTO,Takaari, Osaka 540-6207 (JP); NAGAI,Hideo, Osaka 540-6207 (JP)
(74) Representative: Appelt, Christian W.
(86) International application number: PCT/JP2011/006001
(87) International publication number: WO 2012/098600

(56) References cited:
- WO-A1-2006/017930
- JP-A- 2002 525 814
- JP-A- 2010 055 830
- JP-A- 2010 086 946
- JP-U- 3 154 158
- JP-U- 3 154 158
- US-A1- 2010 171 403
- US-A1- 2010 264 806
- US-A1- 2010 270 904

## Description

### [Technical Field]

The present invention relates to a light bulb shaped lamp including a semiconductor light-emitting device and a lighting apparatus including the light bulb shaped lamp.

### [Background Art]

Compared to a conventional illumination light source, a light emitting diode (LED) which is a semiconductor light-emitting device is small and has high efficiency and long lifetime. Recent market needs for saving energy and resource boost the demand for a light bulb shaped lamp using an LED (hereinafter, also simply referred to as "LED light bulb") which is substitute for a conventional incandescent light bulb using a filament coil.

It is known that the LED has such properties that an optical output decreases as the temperature increases, resulting in shortening its lifetime. In order to cope with this problem, a metal case is provided between a semispherical globe and a base in a conventional LED light bulb so as to prevent the increase in the temperature of an LED (for example, see JP 2006-313717 A).

The following shall describe a conventional LED lamp disclosed in JP 2006-313717 A with reference to FIG. 4. FIG. 4 is a cross-sectional view which illustrates the light bulb shaped LED lamp according to the conventional technology.

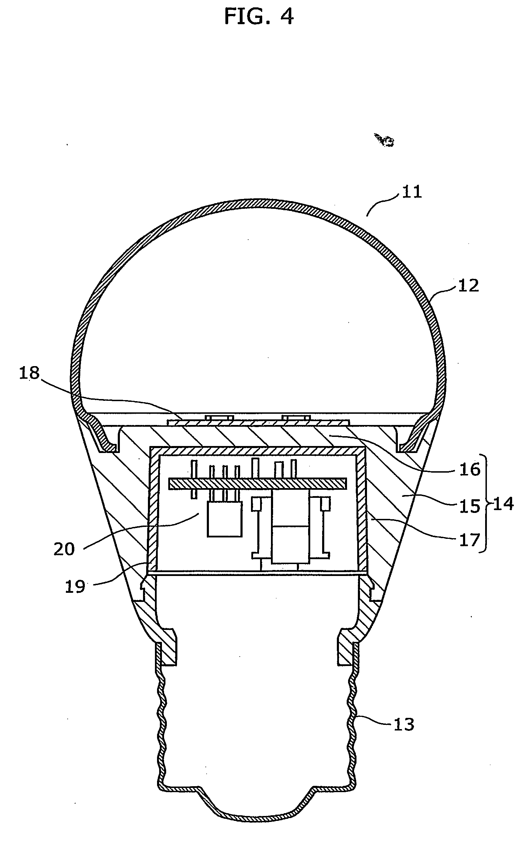

As illustrated in FIG. 4, a conventional light bulb shaped LED lamp 11 includes a translucent cover 12 which is a semispherical globe, a base 13 for receiving electric power, and an outer member 14 which is a metal case.

The outer member 14 includes a circumferential portion 15 exposed to the outside, a circular-plate light-source attachment 16 integrally formed with the circumferential portion 15, and a recess 17 formed inside the circumferential portion 15. On the upper surface of the light-source attachment 16, an LED module 18 which includes a plurality of LEDs is attached. It should be noted that an insulator 19 formed along the shape of the inner surface of the recess 17 is provided on the inner surface of the recess 17, and a lighting circuit 20 for lighting the LEDs is housed in the insulator 19.

According to the conventional light bulb shaped LED lamp 11 having the configuration described above, the outer member 14 in which the light-source attachment 16 and the circumferential portion 15 are integrally formed is used. Thus, heat generated at the LEDs is efficiently heat-conducted from the light-source attachment 16 to the circumferential portion 15. With this, the increase in the temperature of the LEDs is suppressed, thereby preventing reduction of the light output from the LEDs.

US 2010/0270904 A1 shows a light emitting diode bulb includes: a base having a screw-in type electrical connector at a first end of the base; a power converter in the base for converting alternating current voltage into direct current voltage; a plurality of light emitting diode modules stacked on the base, wherein each of the light emitting diode modules have a plurality of side-emitting light emitting diodes; and a cover surrounding the plurality of light emitting diode modules stacked on the base.

WO 2006/017930 A1 is directed to an LED light fixture. The LED light fixture comprises an interface for connecting the fixture to a source of electrical power, a power control section for supplying and controlling power to an LED array producing a light of a suitable intensity and color for the task for which the fixture is to be used and a light diffuser for diffusing the light from the LED array. The present invention is also directed to a novel power control for supplying and controlling power to an LED array comprising a non-switching linear design based on a monolithic approach of power control whereby the load (the LED array) becomes part of the power control system.

JP 2010/086946 A aims to provide a light source for illumination or the like, which can bring a light distribution angle closer to an incandescent lamp than the conventional one. To solve this problem, the substrate suggested in JP 2010/086946 A includes a first heat sink member 21; and a second heat sink member 22 protruding in a shape of reverse frustum from a first top face 21a of the first heat sink member 21. A first light-emitting module 31 is arranged on the first top face 21a of the first heat sink member 21, and a second light-emitting module 32 is arranged on a second top face 22a of the second heat sink member 22. When the second heat sink member 22 is projected from above to the first heat sink member 21, at least part of a first light emission portion 34 of the first light-emitting module 31 exists in a projected area 24. A side face 22c of the second heat sink member 22 constitutes a light reflection face 23.

US 2010/0171403 A1 discloses an LED lamp. The LED lamp includes a base, at least first and second heat sinks, and at least first and second LED modules. The first heat sink includes a first heat absorbing surface and a first mounting surface which is mounted to the base, and defines axially a first through hole. The second heat sink includes a second heat absorbing surface and a second mounting surface which is mounted to the base. The second heat sink is received in the first through hole of the first heat sink. The second heat sink has a height greater than a height of the first heat sink whereby the second heat absorbing surface extends out of the first heat sink. The first and second LED modules are mounted on the first and second heat absorbing surfaces, respectively

### [Summary of Invention]

### [Technical Problem]

However, in the conventional light bulb shaped LED lamp in JP 2006-313717 A, the LED module 18 is provided on the circular-plate light-source attachment 16 in the outer member (metal case) 14. Accordingly, the light toward the base 13 is blocked by the outer member 14, and the light is distributed differently in comparison with incandescent light bulbs. In other words, with the conventional LED light bulbs, it is difficult to achieve the light-distribution properties equivalent to those obtained in the incandescent light bulbs having filament coils.

In view of the above, as one option, the LED light bulb may be formed in a configuration same with that of an incandescent light bulb. Specifically, the configuration of such an LED light bulb includes an LED module which is used as a substitute for a filament coil installed between the two lead wires in an incandescent light bulb. In this case, the LED module is held in the air inside the globe. Accordingly, light generated at an LED is not blocked by the metal case unlike the conventional technology, thereby enabling the light-distribution properties similar to those obtained in the incandescent light bulb to be obtained also in the LED light bulb.

In the LED light bulb configured as described above, the number of chips should be increased if improvement in brightness is desired. Here, in order to increase the number of chips to be installed in a single LED module, the outer diameter of an LED substrate needs to be increased. Increase in the outer diameter of the LED module requires increase in a size of the globe. This causes the LED lamp itself to grow in size.

Growing in size of the LED light bulb is not desirable because it decreases a rate of LED light bulbs mounted on lighting devices, or decreases an appearance quality of the LED light bulb, which means that an appearance shape similar to that of the conventional incandescent light bulb cannot be maintained. To cope with the above, as one option, the multiple number of LED modules may be provided in a globe without increasing in size of the shape of a LED light bulb, using a plurality of LED modules which are combined to form a three-dimensionally structured LED module (for example, forming a U-shape by joining each of the long sides of the three rectangular substrates with one another, a hexahedral cubic shape, or a pentahedral box shape by removing a bottom surface from the hexahedral cubic shape).

However, such a three-dimensional structure has difficulty in controlling the light distribution. In addition, the LED module should be assembled in three-dimensional structure to be a polyhedron. Thus, the three-dimensional structure is undesirable also in productivity.

The present invention is made to solve the above problems, and an object of the present invention is to provide a light bulb shaped lamp capable of having an appearance shape similar to that of the conventional incandescent light bulb, including the increased number of LED chips without growing in size so as to increase the brightness, and easily controlling the light distribution. In addition to the above, the light bulb shaped lamp can also have preferable productivity and long lifetime, and is sufficiently bright.

### [Solution to Problem]

The invention is defined by the subject matter of the independent claims. Several advantageous embodiments are subject to the dependent claims.

A light bulb shaped lamp according to the present invention includes: a hollow globe having an opening; a plurality of light-emitting modules housed in the globe, each of the light-emitting modules having a semiconductor light-emitting device that is a light source; and a stem extending from the opening of the globe to an inside of the globe, the stem supporting the light-emitting modules, in which the stem penetrates at least one of the light-emitting modules, and the light-emitting modules are spaced a predetermined distance apart along an axis of the stem.

The light bulb shaped lamp further has a base for receiving electric power for causing the semiconductor light-emitting device to emit light. Each of the light-emitting modules includes a plate-like base platform, and the semiconductor light-emitting device is mounted on a surface of the base platform. A first light-emitting module among the light-emitting modules which is placed on a top side in the globe is provided in such a manner that the surface of the base platform on which the semiconductor light-emitting device is mounted faces the top of the globe. The light bulb shaped lamp further has a first pair of lead wires for supplying electric power to the light-emitting modules. Each of the light-emitting modules has a rectangular shape The base provides the electric power to a lighting circuit of the light bulb shaped lamp via a second pair of lead wires. Each of the two lead wires of the first pair electrically connects, at one end, to a corresponding one of two electric-power supply terminals provided on diagonally opposite corners of a second light-emitting module among the light-emitting modules which is placed on a base side relative to the first light-emitting module, and electrically connects, at the other end, to the lighting circuit.

According to the present invention, the stem penetrates the light-emitting modules so as to support the light-emitting modules, so that the light bulb shaped lamp having an appearance similar to that of a conventional incandescent light bulb can be obtained, and heat radiation of the light-emitting modules can be increased by the stem thermally connected to the light-emitting modules. Therefore, the light-emitting modules can be used in plural in number and the brightness of the light bulb shaped lamp can be increased. In addition, brightness in a light-emitting direction can be increased, and part of light emitted from the light-emitting module placed on a base side can be reflected on a reverse surface of the light-emitting module placed on a globe side opposite to the base side toward back and sides of the lamp. Therefore, wide light distribution can be achieved. Each of the light emitting modules is not configured in three-dimensional structure as above, allowing light-distribution control to be easily performed. Therefore, a light bulb shaped lamp can be obtained which has a preferable productivity and long life time, and is sufficiently bright.

In the above configuration, it is desirable that the stem includes a projection for positioning at least one of the light-emitting modules.

With this, the positioning of the light-emitting module to a planned position of the stem, where the light-emitting module is to be positioned, is facilitated, thereby facilitating fixation using an adhesive. In addition, irregularity in the positioning upon mass production can be reduced. Furthermore, a contact area between the light-emitting module and the stem increases, to thereby enable the heat generated at the light-emitting module to be efficiently conducted to the stem.

In the above configuration, it is desirable that the stem is made of a material having a heat conductivity higher than a heat conductivity of a base platform included in each of the light-emitting modules.

With this, the heat generated at the light-emitting module can be conducted to the stem so as to be dissipated. Accordingly, reduction in light emission properties of the light-emitting module (semiconductor light-emitting device) and reduction in the lifetime, which are associated with increasing the temperature can be prevented.

In the above configuration, it is desirable that the light bulb shaped lamp further includes: a base which receives electric power for causing the semiconductor light-emitting device to emit light; and a case which performs insulation at least between the stem and the base, and houses a lighting circuit for lighting the semiconductor light-emitting device.

With this, the case can be used for insulation between the stem, the lighting circuit, the base, and the like.

A lighting apparatus according to the present invention includes: the aforementioned light bulb shaped lamp; and a device having a socket, in which the light bulb shaped lamp is mounted on the socket of the device.

With this, the heat in the light bulb shaped lamp can be conducted to the socket of the device through the base so as to be dissipated, to thereby prevent the reduction in the light emission properties of the LED, which is associated with the increase in the temperature. In addition, the lighting apparatus including the light bulb shaped lamp having an appearance shape similar to that of a conventional incandescent light bulb in which a filament coil is provided can be achieved.

### [Advantageous Effects of Invention]

According to the present invention, the stem penetrates a plurality of light-emitting modules so as to support the light-emitting modules. Accordingly, an appearance shape similar to that of a conventional incandescent light bulb can be achieved without enlarging the shape, and heat radiation of the light-emitting modules can be increased by the stem thermally connected to the light-emitting modules. Therefore, the number of LED chips each serving as semiconductor light-emitting device can be increased, to thereby increase brightness of the light bulb shaped lamp. In addition, the brightness in the light-emitting direction can be increased and part of the light emitted from the light-emitting module placed on a base side can be reflected on a reverse surface of the light-module placed on a globe side opposite to the base side, toward backward and sides of the lamp, to thereby achieve wide light distribution. Furthermore, the light-emitting module does not have a complicated three-dimensional structure, to thereby easily control the light distribution. With this, the light bulb shaped lamp can be obtained which has a preferable productivity and long life-time, and is sufficiently bright.

### [Brief Description of Drawings]

[FIG. 1] FIG. 1 is a perspective view illustrating a light bulb shaped lamp according to an embodiment of the present invention.
[FIG. 2] FIG. 2 is an exploded perspective view illustrating a light bulb shaped lamp according to the embodiment of the present invention.
[FIG. 3] FIG. 3 is a schematic cross sectional view illustrating a lighting apparatus according to the embodiment of the present invention.
[FIG. 4] FIG. 4 is a cross sectional view showing a light bulb shaped LED lamp according to a conventional technology.

### [Description of Embodiments]

The following shall describe a light bulb shaped lamp and a lighting apparatus according to an embodiment of the present invention with reference to the drawings. It should be noted that the diagrams are schematic diagrams, and illustration is not necessarily strictly accurate. In addition, each of aspects in the embodiment described below shows a desirable specific example of the present invention. Values, shapes, materials, components, arrangement or connection between components, and the like are merely illustrative, and are not intended to limit the present invention. The present invention is limited only by a scope of the claims. Accordingly, among components described in the below-described embodiment, components not set forth in the independent claims indicating the top level concept of the present invention are not indispensable for achieving the present invention, but are described as optional components included in a more desirable embodiment.

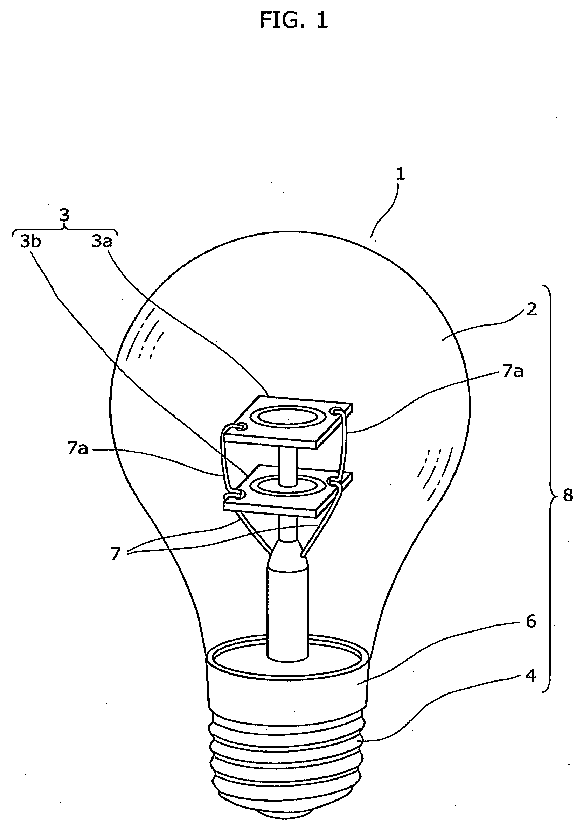

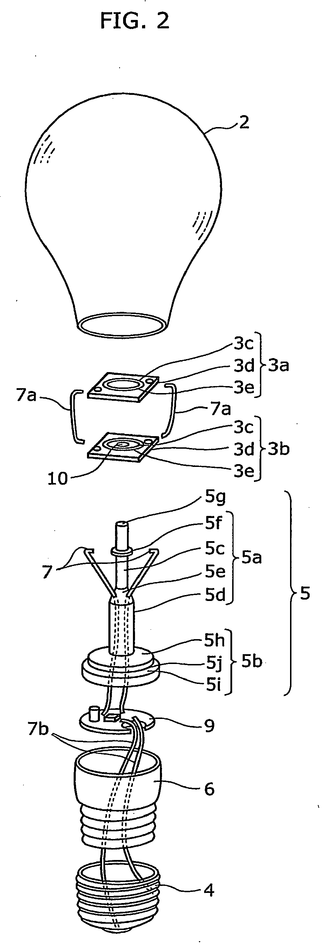

First, a whole structure of a light bulb shaped lamp 1 according to the present embodiment is described with reference to FIGS. 1 and 2.

FIG. 1 is a perspective view illustrating a light bulb shaped lamp according to the embodiment of the present invention. FIG. 2 is an exploded perspective view illustrating the light bulb shaped lamp according to the embodiment of the present invention.

A light bulb shaped lamp 1 according to one embodiment of the present invention is a light bulb shaped LED lamp which substitutes for an incandescent light bulb, as shown in FIGS. 1 and 2. The light bulb shaped lamp 1 includes a translucent globe 2, an LED module 3 having a semiconductor light-emitting device that is a light source, a base 4 for receiving electric power, a stem 5, a lighting circuit 9, a resin case 6 for housing the lighting circuit 9, and at least one lead wire 7. According to the present embodiment, the stem 5 includes a stem component 5a and a supporting component 5b.

The light bulb shaped lamp 1 according to the present embodiment includes an envelope 8 having the globe 2, the case 6, and the base 4.

As shown in FIGS. 1 and 2, the globe 2 houses the LED module 3, and is made of a translucent member transmitting light from the LED module 3 toward the outside. The globe 2 is a silica-glass hollow member which is transmissive for visible light. Therefore, the LED module 3 housed in the globe 2 can be visibly recognized from the outside. This configuration can prevent the light from the LED module 3 from being lost by the globe 2. Furthermore, the globe 2 is not a resin product but a glass product, to thereby achieve high heat resistance.

The globe 2 includes one end which is closed in a spherical shape and the other end which is opened. To be specific, the globe 2 is formed in such a shape that one end is hemispherically shaped, and the other end is shaped in a manner that a part of the hollow sphere extends with getting narrower in the direction apart from the center of the sphere up to an opening formed in a position apart from the center of the sphere. In the present embodiment, the globe 2 has a shape in Type A (JIS C7710) used for a typical incandescent light bulb.

It should be noted that the globe 2 is not necessarily shaped in the Type A. For example, the shape of the globe 2 may be Type G, Type E, and the like. The globe 2 may neither necessarily be translucent to visible light, nor be made of a silica glass. For example, the globe 2 may have thereon an opalescent diffusion film by being applied with silica, or may be formed by a resin member, such as an acrylic member.

The LED module 3 is a light emitting module, and is housed in the globe 2 as shown in FIG. 1. The LED module 3 is desirably placed at a center position of the sphere formed by the globe 2 (for example, inside of a large-diameter space which has a large inner diameter, in the globe 2). As aforementioned, the LED module 3 is placed at the center position of the sphere, to thereby allow the light bulb shaped lamp 1 to obtain, upon lighting up, omnidirectional light distribution properties approximated to light distribution properties of a typical incandescent light bulb using a conventional filament coil. In addition, the LED module 3 is held in midair inside the globe 2 by the stem 5 (in the present embodiment, inside the large-diameter space in the globe 2) so as to be positioned in the air in the globe 2.

In the present embodiment, the LED module 3 includes two LED modules 3a and 3b, as shown in FIGS. 1 and 2. The LED module 3a is placed on a top side in the globe 2, while the LED module 3b is placed on a base side. Furthermore, the LED modules 3a and 3b are held with a predetermined space therebetween approximately in parallel along an axis of a stem component 5a of the stem 5. It should be noted that the number of modules to be included in the LED module 3 is not necessarily two, but may be plural numbers, such as three or more.

The LED module 3 (the LED modules 3a and 3b) has a plate rectangular shape. However, the shape is not limited thereto, and a pentagon-shaped, an octagon-shaped, or other polygonal shaped LED modules may be used. Alternatively, a plurality of plate-type LED modules 3 having different shapes may be combined. Either a translucent LED module 3 or a non-translucent LED module 3 may be used. However, it is desirable to use the translucent LED module 3, because of its properties which allow the brightness in the light-emitting direction (in a downward direction opposite to the base when the base is placed upward, and the lamp is lit up) to be increased. In such a case, it is desirable that a base platform 3d used in the translucent LED module is made of a material having a high light transmittance (for example, more than or equal to 90%). In addition, the LED module 3 to be used in plural in number may emit respective light rays differentiated in colors. For example, three LED modules 3 respectively including chips having red, green, and blue light-emitting colors may be used to emit the light in which the colors are mixed. Furthermore, the LED modules 3 can be individually lighted or flickered so as to be used as illumination. The LED modules 3 having outer diameters different from each other may be combined.

As shown in FIG. 2, the LED module 3b has, in the center thereof, a through hole 10, and the stem component 5a is inserted in the through hole 10 from a tip component 5g so as to penetrate the through hole 10. Meanwhile, the LED module 3a is fixedly placed on the tip component 5g. In other words, at least one of the LED modules 3a and 3b is penetrated by the stem component 5a. The LED modules 3a and 3b are spaced a predetermined distance apart along the axis of the stem component 5a. The distance between the LED modules 3a and 3b desirably corresponds to at least a length of one side of each of the LED modules 3a and 3b. In the present embodiment, the LED modules 3a and 3b are placed with the distance of 18 mm therebetween. If the distance between the LED modules 3a and 3b is too small, light emitted from the LED 3b placed on the base side is absorbed by the LED module 3a placed in a forward position relative to the LED 3b in a light-emitting direction. This prevents the light from being effectively extracted. In addition, if the distance is too large, the light reflected toward the sides and backward of the lamp increases. This decreases the brightness of the lamp in the forward direction in the light-emitting direction. Therefore, it is desirable for the LED modules 3a and 3b to be spaced a distance apart corresponding to the length of the one side of each of the LED modules 3a and 3b. Alternatively, the distance between the LED modules 3a and 3b may be appropriately adjusted on the order of 30% range with respect to the length of the one side of each of the LED modules 3a and 3b so as to obtain the desired properties.

Each of the LED modules 3a and 3b may be fixedly attached to the stem component 5a using a silicone adhesive (not shown). Although the LED module 3a is placed at an edge surface of the tip component 5g, a through hole may also be provided in the LED module 3a to allow the tip component 5g to penetrate through the through hole, followed by fixing the LED module 3a to the stem 5a in the vicinity of the tip component 5g using the silicone adhere. Alternatively, the LED module 3a may be fixed to the edge surface of the tip component 5g using a screw. The above case eliminates the need for preparing the respective LED modules 3 with and without a through hole thereon.

The adhesive made of silicone resin can be used as adhesive. It is desirable to use adhesive having high heat conductivity for efficiently causing the heat of the LED modules 3 to be conducted to the stem component 5a. For example, the heat conductivity can be increased by dispersing metal microparticles in the silicone resin, or by other ways. As the adhesion, a double-sided tape may be used.

A hollow-column projection 5f like a flange which is shown in FIG. 2 is provided at a planned position of the stem 5a, where the LED module 3b is planned to be positioned, to thereby facilitating positioning of the LED module 3b. This reduces irregularity in the positioning upon mass production and facilitating fixation with the adhesive. As a result, a contact area between the LED module 3b and the stem component 5a increases, to thereby enable the heat generated at the LED module 3b to be efficiently conducted to the stem component 5a.

The LED module 3 (LED modules 3a and 3b) is provided at an approximately center of the sphere shape of the globe 2. For the occasion, the center is provided, for example, inside a space having a larger inner diameter in the globe 2. As aforementioned, the LED modules 3 is placed at the center position, to thereby allow the light bulb shaped lamp 1 to obtain, upon lighting up, the omnidirectional light distribution properties approximated to the light distribution properties obtained by a typical incandescent light bulb using a conventional filament coil.

The stem 5 includes the stem component 5a and the supporting component 5b which may be individually provided or integrally formed. The stem component 5a is provided so as to extend from the opening of the globe 2 toward the inside of the globe 2.

As shown in FIGS. 1 and 2, the stem component 5a is shaped in a column, and has the outer diameter which decreases toward the tip component 5g from the side close to the base 4. In other words, the used stem 5a varies in its outer diameter from the supporting component 5b to the tip component 5g. The LED modules 3a and 3b are supported by a first stem component 5c, of the stem component 5a, which has an outer diameter of about 5 mm. A second stem component 5d of the stem 5a on the side close to the supporting component 5b has an outer diameter of about 13 mm. The first stem component 5c and the second stem component 5d are connected to have an inclined component 5e having an approximately conic shape. If the outer diameter of the first stem component 5c is small, the diameter of the through hole 10 to be formed in the LED module 3b can be made small. Accordingly, the number of LED chips 3c to be mounted on the LED module 3b can be increased. If the diameter of the first stem component 5c is too small, heat radiation is insufficient. Therefore, an appropriate outer diameter is necessarily figured out for the first stem component 5c. In the present embodiment, the LED chips 3c are provided circularly, to thereby ensure a substrate area in the center portion of the LED module 3 broadly, unlike a LED module 3 in which the LED chips 3c are linearly provided. This increases a degree of freedom in increasing and decreasing the diameter of the first stem component 5c.

Since the diameter of the stem component 5a attributes to the heat radiation, the larger the diameter becomes, the more desirable the stem component 5a is. However, if the diameter is too large, the stem component 5a cannot be inserted in the globe 2. Accordingly, it is desirable for the stem component 5a to have an outer diameter smaller than an inner diameter of the opening of the globe 2. In the present embodiment, the used globe 2 has the opening with the inner diameter of 33 mm. Therefore, it is desirable for the stem component 5a to be smaller than or equal to 33 mm. However, too large diameter of the stem component 5a causes problems such as increase in weight, failure in keeping appearance quality equal to that of the conventional incandescent light bulb, or the like. In view of this, the diameter of the stem component needs to be considered appropriately.

The inclined component 5e of the stem component 5a is a reflection surface which reflects the light emitted from the LED modules 3 toward the base 4. In other words, the inclined surface can reflect the light traveling to the base 4 toward the backward of the lamp on the side of the base 4, or toward both sides of the lamp. In addition, a desired adjustment in light distribution for reflection light reflected on the reflection surface can be performed by appropriately varying an inclination angle of the inclined surface. The reflection surface can be formed by painting the inclined surface in white. In addition, the reflection surface can be formed by polishing the reflection surface to achieve mirror finish. Similarly, a surface of a first supporting component 5h of the supporting component 5b, which is placed on a side close to the stem component 5a, undergoes inclination, polish finishing, or other processing, to thereby cause the surface to work as a reflection surface. This enables the desired control in the light distribution to be performed.

Although the first stem component 5c, the second stem component 5d, and the inclined component 5e have a solid structure except a through hole for the lead wires 7 in the present embodiment, they may have a hollow structure with a constant thickness.

The LED modules 3a and 3b are electrically connected with each other by the two lead wires 7, at least one lead wire 7a for connecting the LED modules 3a and 3b and at least one lead wire 7b used for power input.

Each of one ends of the two lead wires 7 is connected, with solder or the like, to a corresponding one of two electric-power supply terminals provided on diagonally opposite corners of the LED module 3b, while each of the other ends of the two lead wires 7 passes through an inside of the first supporting component 5h from the inclined component 5e of the stem component 5a so as to be connected to the lighting circuit 9 in the case 6. The lighting circuit 9 is connected to the base 4 by the two lead wires 7b for the power input. The lead wires 7 may be connected to the LED module 3b without passing through the inside of the second stem component 5d.

Each of the LED modules 3a and 3b is connected to the corresponding one of the electric-power supply terminals via at least one of the lead wires 7a with the solder or the like. Electric power is supplied from the base 4 via the lighting circuit 9, lead wires 7, and lead wires 7b for supplying the electric power, so as to cause the LED modules 3a and 3b to emit light. A U-shaped connecting terminal may be provided in an end portion, in an electric-power supply terminal side, of each of the lead wires 7 and each of the lead wires 7a between LED modules, so as to sandwich the electric-power supply terminal of each of the LED modules 3a and 3b, so that the lead wires 7a between the LED modules and the electric-power supply terminals of the LED modules 3a and 3b are connected with solder. Alternatively, a through hole may be provided in each of the electric-power supply terminals of the LED modules 3a and 3b so as to allow the lead wires 7 to pass through, and an intermediate portion of each of the lead wires 7 may be connected to a corresponding one of the electric power supply terminals of the LED module 3b with the solder, so that the one end of each of the lead wires 7 and the corresponding one of the electric-power supply terminals of the LED module 3a may be connected with the solder or the like. When a covered lead wire is used for each of the lead wires 7, a cover of the intermediation portion of the covered lead wire is naturally removed in advance.

The LED module 3a includes a plurality of LED chips 3c, one base platform 3d on which the LED chips 3c are mounted, and a sealing member 3e for sealing the LED chips 3c. The LED module 3a is provided so that a surface on which the LED chips 3c are mounted faces the top of the globe 2. The configuration of the LED module 3b is same with that of the LED module 3a except the through hole 10 which is not provided in the LED module 3a. The LED module 3b is also provided so that a surface on which the LED chips 3c are mounted faces the top of the globe 2. The LED module 3b is provided so that the surface of the LED module 3b on which the LED chips 3c are mounted faces a reverse surface of the LED module 3a (the reverse surface of the surface on which the LED chips 3c are mounted) mounted on the edge surface of the stem.

The base platform 3d is an LED mounted substrate on which the LED chips 3c are to be mounted, and is made of a plate member having translucency to visible light. In the present embodiment, an translucent alumina substrate is used which has transmittance of 96 %, and is shaped in a rectangular having a length of 22 mm, a width of 18 mm, and a thickness of 1.0 mm. The shape of the base platform 3d may be a polygon, such as a pentagon or an octagon, alternatively may be a circle.

In addition, it is desirable for the base platform 3d to be made of a member having high transmittance to the visible light. With the above configuration, the light from the LED chips 3c passes through an inside of the base platform 3d, and is also emitted from a surface of the base platform 3d on which no LED chip 3c is mounted. Accordingly, even when the LED chips 3c are mounted on only one surface (a front surface) of the base platform 3d, the light is also emitted from the other surface (a reverse surface). Therefore, the omnidirectional light distribution properties approximated to those obtained by the incandescent light bulb can be obtained. The base platform 3d may have non-translucency. The LED chips 3c may be mounted on surfaces of the base platform 3d.

It is desirable for the base platform 3d to be made of a member having high heat conductivity and high emissivity in heat radiation, for enhancing the heat radiation. To be specific, the base platform 3d is desirably a member made of a material typically called as a hard brittle material representing glass and ceramic, for example. Here, the emissivity is expressed by a proportion of a black body (perfect radiator) to the heat radiation, and covers values in a range from 0 to 1. The emissivity of a glass or a ceramic ranges from 0.75 to 0.95, so that the heat radiation approximated to that of the black body can be achieved. In practice, thermal emissivity is desirably 0.8 or greater, and more desirably 0.9 or greater.

Each of the LED chips 3c according to the present embodiment is an example of a semiconductor light-emitting device, and is a bare chip that emits monochromatic visible light. In the present embodiment, a blue LED chip 3c which emits blue light when energized is used. The LED chips 3c are mounted on a surface of the base platform 3d. In the present embodiment, a plurality of LED chips 3c are arranged circularly. With the circular arrangement, a center area in the surface of the base platform 3c where no LED chips 3c are provided can be used for the heat radiation. In other words, the heat radiation can be improved by increasing the diameter of the stem component 5a to come into contact with the center area.

The sealing member 3e is formed in a circle to cover the LED chips 3c. In the present embodiment, four sealing members 3e are formed. In addition, the sealing member 3e contains a phosphor serving as an optical wavelength conversion member, and functions as a wavelength conversion layer which performs wavelength conversion on the light emitted from the LED chips 3c. For the sealing member 3e, a phosphor-containing resin prepared by dispersing predetermined phosphor particles and light-diffusion material in a silicon resin may be used.

As phosphor particles, when the LED chips 3c are blue LED chips 3c which emit blue light, YAG yellow phosphor particles such as (Y, Gd)₃Al₅O₁₂:Ce³⁺, Y₃Al₅O₁₂:Ce³⁺ can be used in order to obtain white light. With this, part of the blue light emitted from the LED chips 3c is converted to yellow light with wavelength conversion by the yellow phosphor particles included in the sealing material 3e. The blue light which is not absorbed by the yellow phosphor particles and the yellow light which is converted by the yellow phosphor particles with wavelength conversion are diffused and mixed in the sealing material 3e. After that, the mixed light is emitted from the sealing material as white light.

Particles such as silica are used as the light diffusion material. In this embodiment, the translucent base platform 3d is used. Accordingly, the white light emitted from the sealing member 3e passes through the inside of the base platform 3d, and is also emitted from the surface of the base platform 3d on which no LED chips 3c are mounted. It should be noted that the wavelength conversion material included in the sealing member 3e may be a yellow phosphor such as (Sr, Ba)₂SiO₄:Eu²⁺, Sr₃SiO₅:Eu²⁺, for example. Alternatively, the wavelength conversion material may use a combination of a green phosphor such as (Ba, Sr)₂SiO₄:Eu²⁺, Ba₃Si₆O₁₂N₂:Eu²⁺ and a red phosphor such as CaAlSiN₃:Eu²⁺, Sr₂(Si, Al)₅(N, O)₈:Eu²⁺.

The sealing member 3e may not necessarily be made of a silicon resin, and may be made of an organic material such as fluorine series resin or an inorganic material such as a low-melting-point glass or a sol-gel glass. Since the inorganic material is superior to the organic material in heat-resistance properties, the sealing member 3e made of the inorganic material is advantageous to increasing luminance.

Alternatively, the sealing member 3e may be provided on a surface of the base platform 3d on which no LED chips 3c are mounted. Such a surface of the base platform 3d includes a reverse surface, a side surface, or the like. With this, blue light which passes through the inside the base platform 3d and is emitted from the surfaces on which no LED chips 3c are mounted is also converted to yellow light with the wavelength conversion. Accordingly, it is possible to allow the color of light emitted from the surfaces on which no LED chips 3c are mounted to be closer to the color of light emitted from the surface of the base platform 3d on which the LED chips 3c are mounted.

Meanwhile, a wiring pattern is formed on the surface of the base platform 3d on which the LED chips 3c are mounted. The wiring pattern may be formed of, for example, a translucent conductive material such as indium tin oxide (ITO).

As illustrated in FIGS. 1 and 2, the base 4 serves as a power reception which receives, from a socket (not shown), electric power for causing the LED of the LED module 3 to emit the light. In the present embodiment, the base 4 receives AC power through two contact points. In the present embodiment, the base 4 is an E26 base. The base 4 has an outer surface on which a screw portion is formed for screwing the base 4 into an E26-base socket of a lighting apparatus connected to a commercial AC power source. The base 4 has an inner surface on which a screw portion is also formed for screwing, thereinto, the case 6. It should be noted that the base 4 has a metal cylinder shape which has a bottom. The base 4 does not have to be the E26 base, and may be a base having other size, such as E17. Furthermore, the base 4 does not have to be a screw base, and may be a base in a different shape such as a plug-in base using a pin-terminal.

The stem component 5a is composed of a material having a heat conductivity higher than a heat conductivity of the base platform 3d of the LED module 3. It is desirable that the stem component 5a is composed of a material having a heat conductivity higher than the heat conductivity of glass (approximately 1.0[W/m•K]). The stem component 5a can be composed of a metal or an inorganic material such as ceramics, for example. In the present embodiment, the stem component 5a is made of aluminum having the heat conductivity of 237[W/m•K].

As described above, the stem component 5a is composed of materials having the heat conductivity higher than the heat conductivity of the base platform 3d in each of the LED modules 3a and 3b, to thereby allow the heat from the LED modules 3a and 3b to be efficiently conducted to the stem component 5a through the base platform 3d. With this, the heat from the LED modules 3a and 3b is transferred toward the base 4. This suppresses the reduction in the light-emitting efficiency of the LED modules 3a and 3b and reduction in the lifetime, which are caused by increased temperature.

The supporting component 5b is a component connected to the opening of the globe 2 so as to close the opening of the globe 2 and to support the stem component 5a. In the present embodiment, the supporting component 5b is fit into the case 6 so as to be fixed thereto.

The supporting component 5b is composed of a material having a heat conductivity higher than the heat conductivity of the base platform 3d of each of the LED modules 3a and 3b. It is desirable for the supporting component 5b to be composed of a material having a heat conductivity higher than the heat conductivity of glass. For example, the supporting component 5b may be formed of metal material or an inorganic material such as ceramics. In order to efficiently conduct the heat in the stem component 5a to the supporting component 5b, it is desirable that the material for the supporting component 5b is composed of a material having a heat conductivity equal to or higher than the heat conductivity of the stem component 5a. In the present embodiment, the supporting component 5b is composed of the same material as the stem component 5a; that is, aluminum having the heat conductivity of 237[W/m•K].

As described above, the supporting component 5b is composed of a material having high heat conductivity, to thereby allow the heat which is heat-conducted to the stem component 5a from the LED modules 3a and 3b, to be efficiently conducted to the supporting component 5b. This suppresses the reduction in the light-emitting efficiency of the LED modules 3a and 3b, and reduction in the lifetime of the LED modules 3a and 3b, which are caused by increase in the temperature.

Furthermore, in the present embodiment, the supporting component 5b is composed of a disc-shaped plate material, and includes a first supporting component 5h and a second supporting component 5i having a diameter larger than that of the first supporting component 5h. At the boundary between the first supporting component 5h and the second supporting component 5i, a step component 5j is formed.

The stem component 5a is fixedly attached to the first supporting component 5h, and a side surface of the second supporting component 5i comes into contact with an inner surface of the case 6 so that the second supporting component 5i is fixed to the case 6. At the step component 5j, the opening of the globe 2 is positioned. The step component 5j is filled with an adhesive, so that the globe 2 and the case 6 are bonded.

As described above, the supporting component 5b is connected to the globe 2. Thus, the heat conducted to the supporting component 5b from the LED modules 3 is dissipated to air from outer surfaces of the base 4, case 6, and globe 2 which compose the envelope 8.

As in the present embodiment, when the globe 2 is made of glass, the heat conductivity of the globe 2 is higher than the heat conductivity of the case 6. For the occasion, the globe 2 has a large dimension that is directly exposed to outside air, thereby further promoting efficient heat radiation.

The case 6 performs insulation between the base 4 and the stem 5, and also serves as a resin case for housing therein the lighting circuit 9. In the present embodiment, the case 6 is made of polybutylene terephthalate (PBT) containing 5 to 15% of glass fiber and having a heat conductivity of 0.35[w/m•K].

The lighting circuit 9 is a circuit for lighting the LED modules 3a and 3b, and is housed in the case 6. To be specific, the lighting circuit 9 includes a plurality of circuit elements and a circuit board on which the lighting elements are mounted. In the present embodiment, the lighting circuit 9 converts the AC power received from the base 4 into DC power, and supplies the DC power to the LED modules 3a and 3b through the lead wires 7 and the lead wires 7a between the LED modules. The light bulb shaped lamp 1 does not necessarily have to incorporate therein the lighting circuit 9. For example, the light bulb shaped lamp 1 may not include the lighting circuit 9 when the DC power is directly supplied from the lighting apparatus, cells, or the like. In addition, the lighting circuit 9 is not limited to a smoothing circuit. A light-adjusting circuit, a voltage booster circuit, and others may be appropriately selected and combined.

Although the supporting component 5b is housed in the case 6 in the present embodiment, the supporting component 5b may be exposed to outside air if insulating processing is performed thereon. With this, the supporting component 5b is exposed to the outside air, to thereby enhance the heat radiation. For the occasion, alumite processing may be applied to the exposed component of the supporting component 5b made of aluminum, in order to enhance the heat radiation.

As described above, in the light bulb shaped lamp 1 according to the present embodiment, the stem component 5a penetrates the two LED modules 3a and 3b so as to support the two LED modules 3a and 3b. Accordingly, an appearance shape similar to that of a conventional incandescent light bulb can be achieved without enlarging the shape of the light bulb shaped lamp 1. In addition, the heat radiation of the two LED modules 3a and 3b can be enhanced by the stem component 5a which is thermally connected to the two LED modules 3a and 3b. As a result, the number of LED chips 3c serving as the semiconductor light-emitting devices can be increased, to thereby increase brightness of the light bulb shaped lamp 1. Furthermore, when the light bulb shaped lamp 1 is lighted with the base 4 being placed upward, the light emitted from the LED module 3b placed on the side of the base 4 passes through the LED module 3a placed on the side of the globe 2, and joins together with the light from the LED module 3a, to thereby increase the brightness in the vertical direction which is a light-emitting direction. In addition, part of the light emitted from the LED module 3b placed on the side of the base 4 is reflected on the reverse surface of the LED module 3a which faces the LED module 3b and is placed on the side close to the top of the globe 2, so that the light is reflected toward the lateral and backward (toward the base 4) of the light bulb shaped lamp 1, to thereby achieve wide light distribution. The light distribution can be easily controlled using the plate LED modules 3a and 3b. With this, a light bulb shaped lamp presenting an excellent productivity and sufficient brightness and having a long lifetime can be obtained.

The LED module 3 is placed in the air in the globe 2. Accordingly, the light from the LED module 3 is not blocked by a case, such as the case 6, or the like. This makes it possible to obtain the light distribution properties similar to those obtained by the conventional incandescent light bulb.

In the light bulb shaped lamp 1 according to the present embodiment, the LED modules 3a and 3b are fixedly attached to the stem 5. Therefore, the heat from the LED modules 3a and 3b is efficiently dissipated to the outside using the globe 2, case 6, base 4, or the like through the stem 5 and the like.

Although a light bulb shaped lamp according to one embodiment of the present invention has been described, the present invention is not limited thereto. All possible variations added to the present invention by a person skilled in the art in his/her conceivable range and all possible combinations of structural components in different embodiments may be involved in the present invention, as long as the variations and the combinations are not depart from the principles of the present invention.

For example, though the LED is exemplified as a semiconductor light-emitting device in the above embodiment, the LED may be a semiconductor laser, an organic electro luminescence (EL), or an inorganic EL.

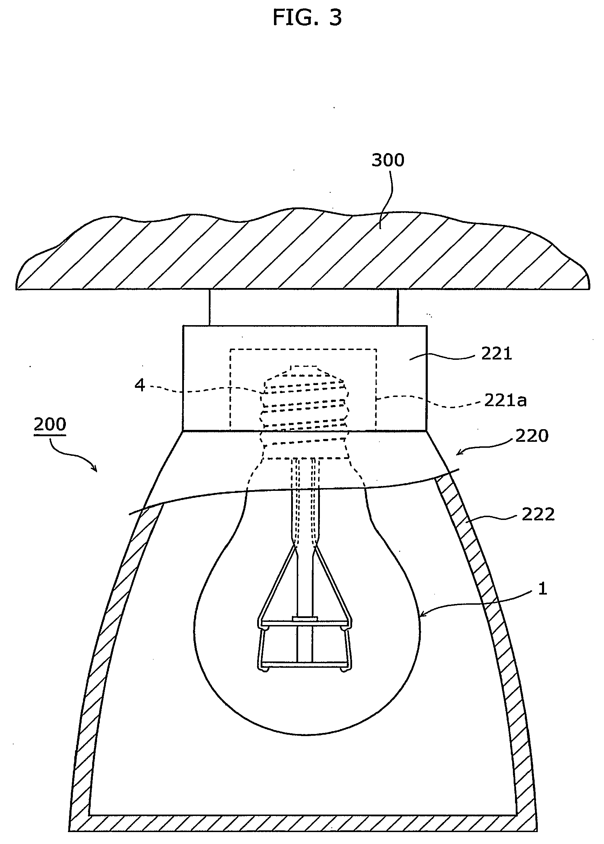

The light bulb shaped lamp 1 according to the present invention is mounted to a device which has a socket and is provided on a ceiling in a room, so as to be used as, for example, a lighting apparatus. Hereinafter, a lighting apparatus according to one embodiment of the present invention is described with reference to FIG. 3. FIG. 3 is a schematic cross sectional view which shows a lighting apparatus 200 according to the embodiment of the present invention.

As shown in FIG. 3, the lighting apparatus 200 according to the embodiment of the present invention is used with being mounted on a ceiling 300 in a room, and includes a light bulb shaped lamp 1 according to the aforementioned embodiment of the present invention and a lighting device 220, for example.

The lighting device 220 is used for turning the light bulb shaped lamp 1 on and off, and includes a main body 221 to be mounted to the ceiling 300 and a lamp cover 222 covering the light bulb shaped lamp 1.

The main body 221 includes a socket 221a. Into the socket 221a, the base 4 of the light bulb shaped lamp is screwed. Through the socket 221a, electric power is supplied to the light bulb shaped lamp 1.

The lighting apparatus 200 described above is an example of the lighting apparatus 200 according to one embodiment of the present invention. The lighting apparatus according to the embodiment of the present invention holds the light bulb shaped lamp 1, and includes at least a socket for supplying electric power to the light bulb shaped lamp 1. Although the lighting apparatus 200 shown in FIG. 3 includes one light bulb shaped lamp 1, the lighting apparatus 200 may include a plurality of light bulb shaped lamps 1.

This allows the heat of the light bulb shaped lamp 1 to be conducted to the socket 221a of the main body 221 through the base 4 so as to be dissipated. In addition, reduction in the light emission properties of the LED module 3, which is associated with increasing the temperature can be prevented. Furthermore, the lighting apparatus 200 can be achieved which includes the light bulb shaped lamp 1 having an appearance similar to the conventional incandescent light bulb in which a filament coil is provided.

### [Industrial Applicability]

The present invention is useful as a light bulb shaped lamp which is used as a substitute for a conventional incandescent light bulb and the like, especially as a light bulb shaped LED light bulb, and a lighting apparatus or the like which includes the light bulb shaped LED light bulb.

### [Reference Signs List]

1 Light bulb shaped lamp
2 Globe
3, 3a, 3b, 18 LED module
3c LED chips
3d Base platform
3e Sealing member
4, 13 Base
5 Stem
5a Stem component
5b Supporting component
5c First stem component
5d Second stem component
5e Inclined component
5f Projection
5g Tip component
5h First supporting component
5i Second supporting component
5j Step component
6 Case
7 Lead wire
7a Lead wire between LED modules
7b Lead wire for power input
8 Envelope
9, 20 Lighting circuit
10 Through hole
11 Light bulb shaped LED lamp
12 Cover
14 Outer member
15 Circumferential portion
16 Light source attachment
17 Recess
19 Insulator
200 Lighting apparatus
220 Lighting device
221 Main body
221a Socket
222 Lamp cover
300 Ceiling

## Claims

1. A light bulb shaped lamp (1) comprising:
a hollow globe (2) having an opening;
a plurality of light-emitting modules (3, 3a, 3b) housed in the globe (2), each of the light-emitting modules (3, 3a, 3b) having a semiconductor light-emitting device (3c) that is a light source;
a base (4) for receiving electric power for causing the semiconductor light-emitting device (3c) to emit light; and
a stem (5) extending from the opening of the globe (2) to an inside of the globe (2), the stem (5) supporting the light-emitting modules (3, 3a, 3b);
wherein the stem (5) penetrates at least one of the light-emitting modules (3, 3a, 3b), and the light-emitting modules (3, 3a, 3b) are spaced a predetermined distance apart along an axis of the stem (5);
wherein each of the light-emitting modules (3, 3a, 3b) includes a plate-like base platform (3d), and the semiconductor light-emitting device (3c) is mounted on a surface of the base platform (3d);
wherein a first light-emitting module (3a) among the light-emitting modules (3, 3a, 3b) which is placed on a top side in the globe (2) is provided in such a manner that the surface of the base platform (3d) on which the semiconductor light-emitting device (3c) is mounted faces the top of the globe (2);
a first pair of lead wires (7) for supplying electric power to the light-emitting modules (3, 3a, 3b); and
**characterized in that:**
the base (4) is adapted to provide the electric power to a lighting circuit (9) of the light bulb shaped lamp (1) via a second pair of lead wires (7b);
each of the light-emitting modules (3, 3a, 3b) has a rectangular shape; and
**in that** each of the two lead wires (7) of the first pair electrically connects, at one end, to a corresponding one of two electric-power supply terminals provided on diagonally opposite corners of a second light-emitting module (3b) among the light-emitting modules (3, 3a, 3b) which is placed on a base side relative to the first light-emitting module (3a), and electrically connects, at the other end, to the lighting circuit (9).

2. The light bulb shaped lamp (1) according to claim 1, wherein the second light-emitting module (3b) among the light-emitting modules (3, 3a, 3b) which is placed on the base side relative to the first light-emitting module (3a) is provided in such a manner that the surface of the base platform (3d) on which the semiconductor light-emitting device (3c) is mounted faces the top of the globe (2).

3. The light bulb shaped lamp (1) according to claim 2, wherein the distance between the light-emitting modules (3, 3a, 3b) corresponds to at least a length of one side of the light-emitting modules (3, 3a, 3b).

4. The light bulb shaped lamp according to any one of claims 1 to 3, wherein the semiconductor light-emitting device (3c) is covered by a sealing member (3e) containing phosphor as an optical wavelength conversion member.

5. The light bulb shaped lamp according to claim 4, wherein the base platform (3d) is translucent, and the sealing member (3e) is formed on a surface of the base platform (3d) on which the semiconductor light-emitting device (3c) is not mounted.

6. The light bulb shaped lamp (1) according to any one of claims 1 to 5, wherein a plurality of semiconductor light-emitting devices (3c) including the semiconductor light-emitting device (3c) are arranged circularly on each of the light-emitting modules (3, 3a, 3b).

7. The light bulb shaped lamp (1) according to any one of claims 1 to 6, wherein the two lead wires (7) of the first pair extend from a through hole provided in the stem (5).

8. The light bulb shaped lamp (1) according to any one of claims 1 to 7, wherein the stem (5) includes a projection (5f) for positioning at least one of the light-emitting modules (3, 3a, 3b).

9. The light bulb shaped lamp (1) according to any one of claims 1 to 8, wherein the stem (5) is made of a material having a heat conductivity higher than a heat conductivity of a base platform (3d) included in each of the light-emitting modules (3, 3a, 3b).

10. The light bulb shaped lamp (1) according to claim 9, wherein the light-emitting modules (3, 3a, 3b) are fixedly attached to the stem (5) through an adhesive for conducting the heat generated by the light-emitting modules (3, 3a, 3b) to the stem (5).

11. The light bulb shaped lamp (1) according to any one of claims 1 to 10, further comprising:
a case (6) which performs insulation at least between the stem (5) and the base (4), and houses the lighting circuit (9) for lighting the semiconductor light-emitting device (3c).

12. A lighting apparatus comprising:
the light bulb shaped lamp (1) according to any one of claims 1 to 11; and
a device having a socket (221 a),
wherein the light bulb shaped lamp (1) is mounted on the socket of the device.

## Patentansprüche

1. Glühbirnenförmige Lampe (1), Folgendes umfassend:
eine Hohlkugel (2) mit einer Öffnung;
mehrere lichtemittierende Module (3, 3a, 3b), welche in der Kugel (2) untergebracht sind, wobei jedes der lichtemittierenden Module (3, 3a, 3b) eine lichtemittierende Halbleitervorrichtung (3c) aufweist, welche eine Lichtquelle ist;
eine Basis (4) zum Aufnehmen elektrischer Leistung, um zu bewirken, dass die lichtemittierende Halbleitervorrichtung (3c) Licht emittiert; und
einen Schaft (5), welcher sich von der Öffnung der Kugel (2) in ein Inneres der Kugel (2) erstreckt, wobei der Schaft (5) die lichtemittierenden Module (3, 3a, 3b) stützt;
wobei der Schaft (5) mindestens eines der lichtemittierenden Module (3, 3a, 3b) durchdringt und die lichtemittierenden Module (3, 3a, 3b) eine vorgegebene Entfernung entlang einer Achse des Schafts (5) voneinander beabstandet sind;
wobei jedes der lichtemittierenden Module (3, 3a, 3b) eine plattenähnliche Basisplattform (3d) aufweist und die lichtemittierende Halbleitervorrichtung (3c) auf einer Oberfläche der Basisplattform (3d) befestigt ist;
wobei ein erstes lichtemittierendes Modul (3a) unter den lichtemittierenden Modulen (3, 3a, 3b), welches auf einer Oberseite in der Kugel (2) angeordnet ist, auf eine derartige Weise bereitgestellt ist, dass die Oberfläche der Basisplattform (3d), auf welcher die lichtemittierende Halbleitervorrichtung (3c) befestigt ist, dem oberen Bereich der Kugel (2) gegenübersteht;
ein erstes Paar Anschlussdrähte (7) zum Zuführen von elektrischem Strom an die lichtemittierenden Module (3, 3a, 3b); und
**dadurch gekennzeichnet, dass**
die Basis (4) eingerichtet ist, um den elektrischen Strom an einer Beleuchtungsschaltung (9) der glühbirnenförmigen Lampe (1) über ein zweites Paar Anschlussdrähte (7b) bereitzustellen;
jedes der lichtemittierenden Module (3, 3a, 3b) eine rechteckige Form aufweist; und
dadurch, dass jeder der beiden Anschlussdrähte (7) des ersten Paares an einem Ende mit einem entsprechenden von zwei elektrischen Stromversorgungsanschlüssen elektrisch verbunden ist, welche an diagonal entgegengesetzten Ecken eines zweiten lichtemittierenden Moduls (3b) unter den lichtemittierenden Modulen (3, 3a, 3b) bereitgestellt sind, welches auf einer Basisseite hinsichtlich des ersten lichtemittierenden Moduls (3a) angeordnet ist, und an dem anderen Ende mit der Beleuchtungsschaltung (9) verbunden ist.

2. Glühbirnenförmige Lampe (1) nach Anspruch 1, wobei das zweite lichtemittierende Modul (3b) unter den lichtemittierenden Modulen (3, 3a, 3b), welches auf einer Basisseite hinsichtlich des ersten lichtemittierenden Moduls (3a) angeordnet ist, auf eine derartige Weise bereitgestellt ist, dass die Oberfläche der Basisplattform (3d), auf welcher die lichtemittierende Halbleitervorrichtung (3c) befestigt ist, dem Oberen der Kugel (2) gegenübersteht.

3. Glühbirnenförmige Lampe (1) nach Anspruch 2, wobei die Entfernung zwischen den lichtemittierenden Modulen (3, 3a, 3b) mindestens einer Länge einer Seite der lichtemittierenden Module (3, 3a, 3b) entspricht.

4. Glühbirnenförmige Lampe nach einem der Ansprüche 1 bis 3, wobei die lichtemittierende Halbleitervorrichtung (3c) durch ein Dichtungsglied (3e) abgedeckt ist, welches Phosphor als ein Umwandlungsglied der optischen Wellenlänge enthält.

5. Glühbirnenförmige Lampe nach Anspruch 4, wobei die Basisplattform (3d) durchscheinend ist und das Dichtungsglied (3e) auf einer Oberfläche der Basisplattform (3d) ausgebildet ist, auf welcher die lichtemittierende Halbleitervorrichtung (3c) nicht befestigt ist.

6. Glühbirnenförmige Lampe (1) nach einem der Ansprüche 1 bis 5, wobei mehrere lichtemittierende Halbleitervorrichtungen (3c), welche die lichtemittierende Halbleitervorrichtung (3c) umfassen, zirkular auf jedem der lichtemittierenden Module (3, 3a, 3b) angeordnet sind.

7. Glühbirnenförmige Lampe (1) nach einem der Ansprüche 1 bis 6, wobei sich die beiden Anschlussdrähte (7) des ersten Paares aus einer Durchgangsbohrung erstrecken, welche in dem Schaft (5) bereitgestellt ist.

8. Glühbirnenförmige Lampe (1) nach einem der Ansprüche 1 bis 7, wobei der Schaft (5) eine Ausrichtung (5f) zum Anordnen von mindestens einem der lichtemittierenden Module (3, 3a, 3b) aufweist.

9. Glühbirnenförmige Lampe (1) nach einem der Ansprüche 1 bis 8, wobei der Schaft (5) aus einem Material mit einer höheren Wärmeleitfähigkeit als eine Wärmeleitfähigkeit einer Basisplattform (3d) angefertigt ist, welche in jeder der lichtemittierenden Module (3, 3a, 3b) aufgenommen ist.

10. Glühbirnenförmige Lampe (1) nach Anspruch 9, wobei die lichtemittierenden Module (3, 3a, 3b) starr an dem Schaft (5) mit einen Klebstoff befestigt sind, um die Wärme, welche von den lichtemittierenden Modulen (3, 3a, 3b) erzeugt wird, an den Schaft (5) abzuleiten.

11. Glühbirnenförmige Lampe (1) nach einem der Ansprüche 1 bis 10, weiterhin Folgendes umfassend:
ein Gehäuse (6), welches zumindest zwischen dem Schaft (5) und der Basis (4) für Isolation sorgt und die Beleuchtungsschaltung (9) zum Beleuchten der lichtemittierenden Halbleitervorrichtung (3c) beherbergt.

12. Beleuchtungsvorrichtung, Folgendes umfassend:
die glühbirnenförmige Lampe (1) nach einem der Ansprüche 1 bis 11; und
eine Vorrichtung mit einem Sockel (221a),
wobei die glühbirnenförmige Lampe (1) auf dem Sockel der Vorrichtung befestigt ist.

## Revendications

1. Lampe en forme d'ampoule électrique (1) qui comprend :
un globe creux (2) qui possède une ouverture ;
une pluralité de modules d'émission de lumière (3, 3a, 3b) contenus dans le globe (2), chacun des modules d'émission de lumière (3, 3a, 3b) ayant un dispositif d'émission de lumière à semi-conducteurs (3c) qui est une source de lumière ;
une base (4) destinée à recevoir de l'électricité afin que le dispositif d'émission de lumière à semi-conducteurs (3c) émette de la lumière ; et
une tige (5) qui s'étend entre l'ouverture du globe (2) et un intérieur du globe (2), la tige (5) supportant les modules d'émission de lumière (3, 3a, 3b) ;
dans lequel la tige (5) pénètre dans au moins l'un des modules d'émission de lumière (3, 3a, 3b), et les modules d'émission de lumière (3, 3a, 3b) sont espacés à une distance prédéterminée le long d'un axe de la tige (5) ;
dans lequel chacun des modules d'émission de lumière (3, 3a, 3b) comprend une plate-forme de base en forme de plaque (3d), et le dispositif d'émission de lumière à semi-conducteurs (3c) est monté sur une surface de la plate-forme de base (3d) ;
dans lequel un premier module d'émission de lumière (3a) parmi les modules d'émission de lumière (3, 3a, 3b) qui est placé sur une face supérieure du globe (2) est prévu de sorte que la surface de la plate-forme de base (3d) sur laquelle le dispositif d'émission de lumière à semi-conducteurs (3c) est monté soit tournée vers la partie supérieure du globe (2) ;
une première paire de fils (7) destinés à fournir de l'électricité aux modules d'émission de lumière (3, 3a, 3b) ; et
**caractérisée en ce que** :
la base (4) est adaptée pour fournir de l'électricité à un circuit d'éclairage (9) de la lampe en forme d'ampoule électrique (1) par le biais d'une seconde paire de fils (7b) ;
chacun des modules d'émission de lumière (3, 3a, 3b) possède une forme rectangulaire ; et
**en ce que** chacun des deux fils (7) de la première paire est relié électriquement, à une extrémité, à l'une de deux bornes d'alimentation en électricité correspondantes prévues sur les angles diagonalement opposés d'un second module d'émission de lumière (3b) parmi les modules d'émission de lumière (3, 3a, 3b) qui est placé sur une face latérale par rapport au premier module d'émission de lumière (3a), et est relié électriquement, à l'autre extrémité, au circuit d'éclairage (9).

2. Lampe en forme d'ampoule électrique (1) selon la revendication 1, dans laquelle le second module d'émission de lumière (3b) parmi les modules d'émission de lumière (3, 3a, 3b) qui est placé sur la face de base par rapport au premier module d'émission de lumière (3a) est prévu de sorte que la surface de la plate-forme de base (3d) sur laquelle le dispositif d'émission de lumière à semi-conducteurs (3c) est monté soit tournée vers la partie supérieure du globe (2).

3. Lampe en forme d'ampoule électrique (1) selon la revendication 2, dans laquelle la distance entre les modules d'émission de lumière (3, 3a, 3b) correspond à au moins une longueur d'un côté des modules d'émission de lumière (3, 3a, 3b).

4. Lampe en forme d'ampoule électrique (1) selon l'une quelconque des revendications 1 à 3, dans laquelle le dispositif d'émission de lumière à semi-conducteurs (3c) est recouvert par un élément d'étanchéité (3e) qui contient du phosphore en guise d'élément de conversion de longueur d'onde optique.

5. Lampe en forme d'ampoule électrique (1) selon la revendication 4, dans laquelle la plate-forme de base (3d) est translucide, et l'élément d'étanchéité (3e) est formé sur une surface de la plate-forme de base (3d) sur laquelle le dispositif d'émission de lumière à semi-conducteurs (3c) n'est pas monté.

6. Lampe en forme d'ampoule électrique (1) selon l'une quelconque des revendications 1 à 5, dans laquelle une pluralité de dispositifs d'émission de lumière à semi-conducteurs (3c) qui comprennent le dispositif d'émission de lumière à semi-conducteurs (3c) est disposée de manière circulaire sur chacun des modules d'émission de lumière (3, 3a, 3b).

7. Lampe en forme d'ampoule électrique (1) selon l'une quelconque des revendications 1 à 6, dans laquelle les deux fils (7) de la première paire s'étendent depuis un trou traversant prévu dans la tige (5).

8. Lampe en forme d'ampoule électrique (1) selon l'une quelconque des revendications 1 à 7, dans laquelle la tige (5) comprend une saillie (5f) destinée à positionner au moins l'un des modules d'émission de lumière (3, 3a, 3b).

9. Lampe en forme d'ampoule électrique (1) selon l'une quelconque des revendications 1 à 8, dans laquelle la tige (5) est composée d'un matériau qui possède une conductivité thermique supérieure à une conductivité thermique d'une plate-forme de base (3d) incluse dans chacun des modules d'émission de lumière (3, 3a, 3b).

10. Lampe en forme d'ampoule électrique (1) selon la revendication 9, dans laquelle les modules d'émission de lumière (3, 3a, 3b) sont reliés de manière fixe à la tige (5) à l'aide d'un adhésif afin de conduire la chaleur générée par les modules d'émission de lumière (3, 3a, 3b) vers la tige (5).

11. Lampe en forme d'ampoule électrique (1) selon l'une quelconque des revendications 1 à 10, qui comprend en outre :
une enceinte (6) qui assure une isolation au moins entre la tige (5) et la base (4), et qui contient le circuit d'éclairage (9) destiné à éclairer le dispositif d'émission de lumière à semi-conducteurs (3c).

12. Appareil d'éclairage qui comprend :
la lampe en forme d'ampoule électrique (1) selon l'une quelconque des revendications 1 à 11 ; et
un dispositif qui possède une fiche (221a),
dans lequel la lampe en forme d'ampoule électrique (1) est montée sur la fiche du dispositif.
